# EUROPÄISCHE PATENTSCHRIFT

(11) **EP 2 607 844 B1**
(45) Veröffentlichungstag und Bekanntmachung des Hinweises auf die Patenterteilung: **24.12.2014**
(21) Anmeldenummer: 12193513.4
(22) Anmeldetag: 21.11.2012
(51) Int. Cl.: G01C 15/00, G02B 26/08, G02B 5/10

(54) **Lasersystem zur Erzeugung einer linienförmigen Lasermarkierung**
Laser system for producing a linear laser marking
Système laser de génération d'un marquage laser linéaire

(30) Priorität: 22.12.2011 DE 102011089557
(43) Veröffentlichungstag der Anmeldung: 26.06.2013
(73) Patentinhaber: HILTI Aktiengesellschaft, 9494 Schaan (LI)
(72) Erfinder: Dang, Lieu-Kim, 9473 Gams (CH)
(74) Vertreter: Hilti Aktiengesellschaft Corporate Intellectual Property

(56) Entgegenhaltungen:
- DE-A1-102010 028 794
- US-A- 3 820 903

## Beschreibung

### Technisches Gebiet

Die vorliegende Erfindung betrifft ein Lasersystem zur Erzeugung einer linienförmigen Lasermarkierung gemäß dem Oberbegriff des Anspruchs 1.

### Stand der Technik

US 7,497,018 B2 offenbart ein bekanntes Lasersystem zur Erzeugung einer linienförmigen Lasermarkierung. Das Lasersystem umfasst eine Strahlquelle, eine Kollimationslinse mit einer optischen Achse und einen Kegelspiegel mit einer Kegelachse sowie einen Umlenkspiegel, der zwischen der Kollimationslinse und dem Kegelspiegel angeordnet ist. Eine Kollimationslinse ist eine spezielle Fokussieroptik mit unendlicher Brennweite. Ein Kegelspiegel ist ein reflektierendes optisches Element, das zumindest abschnittsweise in Form eines Kegels mit einer Grundfläche und einer an die Grundfläche angrenzenden Mantelfläche ausgebildet ist, wobei die Mantelfläche als Reflexionsfläche ausgebildet ist, an der ein Laserstrahl umgelenkt und aufgeweitet wird.

Die Strahlquelle ist als Laserdiode ausgebildet, die einen Laserstrahl entlang einer Ausbreitungsrichtung aussendet, wobei die Ausbreitungsrichtung des Laserstrahls parallel zur optischen Achse der Kollimationslinse verläuft. Der Laserstrahl trifft auf die Kollimationslinse, die aus dem divergenten einen kollimierten Laserstrahl erzeugt. Der kollimierte Laserstrahl trifft auf den Umlenkspiegel, der den kollimierten Laserstrahl um 90° in Richtung des Kegelspiegels umlenkt. Der Kegelspiegel lenkt den kollimierten Laserstrahl um und erzeugt einen Laserstrahl, der sich in einer Ebene senkrecht zum kollimierten Laserstrahl ausbreitet und auf einer Projektionsfläche, beispielsweise in Form einer Wand, einer Decke und/oder eines Bodens, eine linienförmige Lasermarkierung erzeugt. Eine linienförmige Lasermarkierung mit einem Öffnungswinkel von 180° wird erzeugt, wenn der kollimierte Laserstrahl einen halben Kegel ausleuchtet. Solange der Radius des kollimierten Laserstrahls grösser als der Abstand zwischen der Kegelspitze und dem Zentrum des kollimierten Laserstrahls ist, wird ein um 360° geschlossene Lasermarkierung erzeugt, wobei die Intensität der linienförmigen Lasermarkierung und damit die Sichtbarkeit in dem Abschnitt des Kegels zunehmen, in dem das Zentrum des kollimierten Laserstrahls angeordnet ist. Die Kegelachse des Kegelspiegels ist parallel versetzt zur optischen Achse der Kollimationslinse angeordnet. Durch den Parallelversatz der Kegelachse trifft das Zentrum des kollimierten Laserstrahls nicht auf die Kegelspitze, sondern auf die Mantelfläche des Kegelspiegels.

Das bekannte Lasersystem zur Erzeugung einer linienförmigen Lasermarkierung weist den Nachteil auf, dass ein zusätzliches optisches Element in Form des Umlenkspiegels erforderlich ist, um den Parallelversatz des Laserstrahls zur Kegelachse zu erzeugen. Jedes zusätzliche optische Element muss justiert werden und erhöht die Komplexität des Lasersystems. Außerdem ermöglicht das bekannte Lasersystem nur die Erzeugung von linienförmigen Lasermarkierungen mit einem Öffnungswinkel von 180°, Lasermarkierungen mit Öffnungswinkeln kleiner als 180° und grösser als 180° können mit dem bekannten Lasersystem nicht erzeugt werden.

Die Schrift DE102010028794 offenbart ein optisches System zur Strahlformung eines Laserstrahls, mit einem ersten optischen Element, das zumindest abschnittsweise als Grundkörper mit einer Grundfläche und einer an die Grundfläche angrenzenden Mantelfläche ausgebildet ist. Die Grundfläche und die Mantelfläche sind zumindest abschnittsweise als Transmissionsflächen für den Laserstrahl ausbildet und der Grundkörper weist einen Ausschnitt mit einer Mantelfläche, die zumindest abschnittsweise als Reflektionsfläche für den Laserstrahl ausgebildet ist, auf. Die Anzahl an optischen Komponenten ist dabei reduziert und die Erzeugung einer linienförmigen Lasermarkierung mit einem Öffnungswinkel kleiner als 360° ermöglicht. Der Öffnungswinkel der linienförmigen Lasermarkierung ist verstellbar.

### Darstellung der Erfindung

Die Aufgabe der vorliegenden Erfindung besteht demgegenüber darin, ein alternatives Lasersystem zu entwickeln.

Diese Aufgabe wird bei dem eingangs genannten Lasersystem zur Erzeugung einer linienförmigen Lasermarkierung erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass die Ausbreitungsrichtung des Laserstrahls unter einem Winkel zur optischen Achse der Fokussieroptik geneigt ist. Durch die Neigung des Laserstrahls und durch die koaxiale Anordnung von optischer Achse und Kegelachse liegt das Zentrum des kollimierten Laserstrahls auf der Mantelfläche des Kegelspiegels und ist zur Kegelspitze versetzt. Diese Ausführung hat den Vorteil, dass kein zusätzliches optisches Element in Form eines Umlenkspiegels erforderlich ist, um einen Versatz zwischen der Kegelachse und dem kollimierten Laserstrahl zu erzeugen. Über den Winkel des Laserstrahls zur optischen Achse der Fokussieroptik lassen sich der vom kollimierten Laserstrahl ausgeleuchtete Abschnitt der reflektierenden Mantelfläche des Kegelspiegels und damit der Öffnungswinkel der linienförmigen Lasermarkierung einstellen.

Die Fokussierung eines Laserstrahls kann mit einer einzelnen Fokussierlinse oder mit einem als Teleskop ausgebildeten optischen System, das aus mehreren optischen Elementen besteht, erfolgen. Unter dem Begriff Fokussieroptik werden sowohl eine einzelne Fokussierlinse als auch optische Systeme zur Fokussierung aus mehreren optischen Elementen zusammengefasst. Als optische Achse einer Fokussierlinse ist die durch die Krümmungsmittelpunkte der lichtbrechenden Flächen verlaufende Gerade definiert; ist eine der beiden lichtbrechenden Flächen plan, verläuft die optische Achse durch den Krümmungsmittelpunkt der gekrümmten lichtbrechenden Fläche und steht senkrecht auf der planen Fläche. Eine Fokussieroptik kann einen Laserstrahl entweder auf eine endliche Distanz oder auf Unendlich fokussieren. Im letzten Fall wird der einfallende Lichtstrahl kollimiert und die Fokussieroptik wird auch als Kollimationsoptik bezeichnet.

Bevorzugt ist eine Winkelverstelleinrichtung vorgesehen, mit der der Winkel zwischen der Ausbreitungsrichtung des Laserstrahls und der optischen Achse der Fokussieroptik um einen Drehpunkt verstellbar ist, wobei der Drehpunkt der Wnkelverstelleinrichtung mit einer virtuellen Punktquelle der Strahlquelle zusammenfällt. Mit Hilfe einer Winkelverstelleinrichtung kann der Öffnungswinkel der linienförmigen Lasermarkierung auf der Projektionsfläche verändert werden. Außerdem kann die Position des linienförmigen Laserstrahls innerhalb einer Ebene senkrecht zur Kegelachse verändert werden. Durch die Verstellbarkeit des Öffnungswinkels des linienförmigen Laserstrahls kann die gesamte Laserleistung dort konzentriert werden, wo eine sichtbare linienförmige Lasermarkierung gewünscht ist.

Dabei ist der Drehpunkt der Winkelverstelleinrichtung besonders bevorzugt auf der optischen Achse der Fokussieroptik angeordnet. Wenn der Drehpunkt der Winkelverstelleinrichtung auf der optischen Achse der Fokussieroptik angeordnet ist, ist sichergestellt, dass die Ausbreitungsrichtung des kollimierten Laserstrahls parallel zur optischen Achse der Fokussieroptik verläuft.

Bevorzugt ist der Winkel zwischen der Ausbreitungsrichtung des Laserstrahls und der optischen Achse der Fokussieroptik in einer ersten Richtung und/oder einer zweiten Richtung verstellbar. Die Verstellbarkeit des Winkels in einer Richtung ermöglicht dem Anwender, die linienförmige Lasermarkierung auf gegenüberliegenden Projektionsflächen, beispielsweise auf gegenüberliegenden Wänden oder auf dem Boden und an der Decke, zu erzeugen. Bei einer Verstellbarkeit des Winkels in zwei Richtungen kann die linienförmige Lasermarkierung in jeder gewünschten Länge und an jeder Winkelposition erzeugt werden. Die Winkelverstelleinrichtung umfasst beispielsweise eine Kugelkalotte, in der die Strahlquelle gelagert ist. Die Kugelkalotte hat den Vorteil, dass die Neigung der Strahlquelle in zwei Richtungen verstellt werden kann.

Bevorzugt ist eine motorisch verstellbare Wnkelverstelleinrichtung vorgesehen. Eine motorische Verstellbarkeit des Winkels hat den Vorteil, dass der Öffnungswinkel der linienförmigen Lasermarkierung und die Position auf einer Projektionsfläche einfach für den Anwender verstellbar sind.

In einer bevorzugten Ausführungsform ist eine Strahlteilungsoptik vorgesehen, die den Laserstrahl in einen ersten Teilstrahl entlang einer ersten Ausbreitungsrichtung und einen zweiten Teilstrahl entlang einer zweiten Ausbreitungsrichtung teilt. Ein Lasersystem mit einer Strahlquelle und einer Strahlteilungsoptik, die mehrere Teilstrahlen erzeugt, eignet sich vor allem für Laserwellenlängen mit einer hohen Sichtbarkeit für das menschliche Auge, wie beispielsweise die grünen Laserwellenlängen bei 532 nm und 555 nm, die gegenüber der häufig verwendeten roten Laserwellenlänge bei 635 nm eine drei- bis vierfach bessere Sichtbarkeit aufweisen.

Die Strahlteilungsoptik ist besonders bevorzugt im Strahlengang des Laserstrahls hinter der Fokussieroptik angeordnet. Die Anordnung der Strahlteilungsoptik hinter der Fokussieroptik hat den Vorteil, dass die Anzahl an optischen Elementen im Lasersystem weiter reduziert wird. Zur Erzeugung von zwei linienförmigen Lasermarkierungen, deren Ausbreitungsebenen unter einem definierten Winkel, insbesondere unter 90°, angeordnet sind, ist nur eine Fokussieroptik erforderlich. Dabei wird die erste linienförmige Lasermarkierung aus dem ersten Teilstrahl mittels des Kegelspiegels erzeugt, den das erfindungsgemäße Lasersystem aufweist. Zur Erzeugung der zweiten linienförmigen Lasermarkierung aus dem zweiten Teilstrahl kann ein weiterer Kegelspiegel oder ein sonstiges optisches Element, wie beispielsweise eine Zylinderlinse, vorgesehen sein.

In einer bevorzugten Ausführungsform sind die Fokussieroptik und der Kegelspiegel in eine gemeinsame Strahlformungsoptik integriert. Die Ausführung einer gemeinsamen Strahlformungsoptik hat den Vorteil, dass nur ein optischer Träger erforderlich ist und die Justage der Fokussieroptik und des Kegelspiegels zueinander bereits bei der Herstellung der Strahlformungsoptik erfolgt. Der Justageaufwand ist reduziert gegenüber einem Lasersystem, bei dem die Fokussieroptik und der Kegelspiegel als separate optische Elemente ausgebildet sind.

In einer bevorzugten Ausführungsform sind eine erste und zweite Strahlquelle vorgesehen, wobei die erste Strahlquelle einen ersten Laserstrahl entlang einer ersten Ausbreitungsrichtung und die zweite Strahlquelle einen zweiten Laserstrahl entlang einer zweiten Ausbreitungsrichtung aussendet. Ein Lasersystem mit zwei Strahlquellen hat den Vorteil, dass zwei Laserstrahlen mit einer elliptischen Strahlverteilung, wie sie bei typischen Halbleiterlasern auftreten, durch Überlagerung einen Laserstrahl mit homogenerer Strahlverteilung aufweisen. Eine homogene Strahlverteilung des Laserstrahls führt dazu, dass die linienförmige Lasermarkierung, die auf einer Projektionsfläche erzeugt wird, eine gleichmäßige Sichtbarkeit aufweist.

Bevorzugt sind die erste Ausbreitungsrichtung des ersten Laserstrahls unter einem ersten Winkel und die zweite Ausbreitungsrichtung des zweiten Laserstrahls unter einem zweiten Winkel zur optischen Achse der Fokussieroptik geneigt. Dabei sind besonders bevorzugt eine erste Winkelverstelleinrichtung zur Einstellung des ersten Winkels und eine zweite Winkelverstelleinrichtung zur Einstellung des zweiten Winkels vorgesehen.

In einer ersten Variante weisen die erste und zweite Strahlquelle verschiedene Laserwellenlängen auf. Strahlquellen mit verschiedenen Laserwellenlängen weisen den Vorteil auf, dass die linienförmigen Lasermarkierungen, die aus den Laserstrahlen der Strahlquellen erzeugt werden, auf einer Projektionsfläche anhand der Farbe der Laserstrahlen unterschieden werden können. Als Strahlquellen eignen sich beispielsweise Halbleiterlaser mit einer roten Laserwellenlänge bei 635 nm und grüne Laserwellenlängen bei 532 nm und 555 nm.

In einer zweiten Variante weisen die erste und zweite Strahlquelle die gleiche Laserwellenlänge auf. Bei Strahlquellen mit der gleichen Laserwellenlänge kann die Strahlverteilung durch Überlagerung verändert und beispielsweise homogenisiert werden. Die Sichtbarkeit der linienförmigen Lasermarkierung wird verbessert.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erste Ausführungsform eines erfindungsgemäßen Lasersystems mit einer Strahlquelle, einer Fokussierlinse und einem Kegelspiegel, wobei der Winkel zwischen der Strahlquelle und der Fokussierlinse mittels einer Winkelverstelleinrichtung verstellbar ist;
- FIG. 2: eine zweite Ausführungsform eines erfindungsgemäßen Lasersystems mit einer Strahlquelle, einer Strahlteilungsoptik, einem ersten optischen System aus Fokussieroptik und Kegelspiegel und einem zweiten optischen System aus Fokussieroptik und Kegelspiegel;
- FIG. 3: eine dritte Ausführungsform eines erfindungsgemäßen Lasersystems mit einer Strahlquelle, einer Kollimationsoptik, einer Strahlteilungsoptik, einem Kegelspiegel und einer Zylinderlinse;
- FIG. 4: eine vierte Ausführungsform eines erfindungsgemäßen Lasersystems mit einer ersten Strahlquelle, einer zweiten Strahlquelle, einem Umlenkspiegel, einer Kollimationslinse und einem Kegelspiegel; und
- FIG. 5: eine fünfte Ausführungsform eines erfindungsgemäßen Lasersystems mit einer Strahlquelle, einer Kollimationsoptik und einen Kegelspiegel, wobei die Kollimationsoptik und der Kegelspiegel in eine gemeinsame Strahlformungsoptik integriert sind.

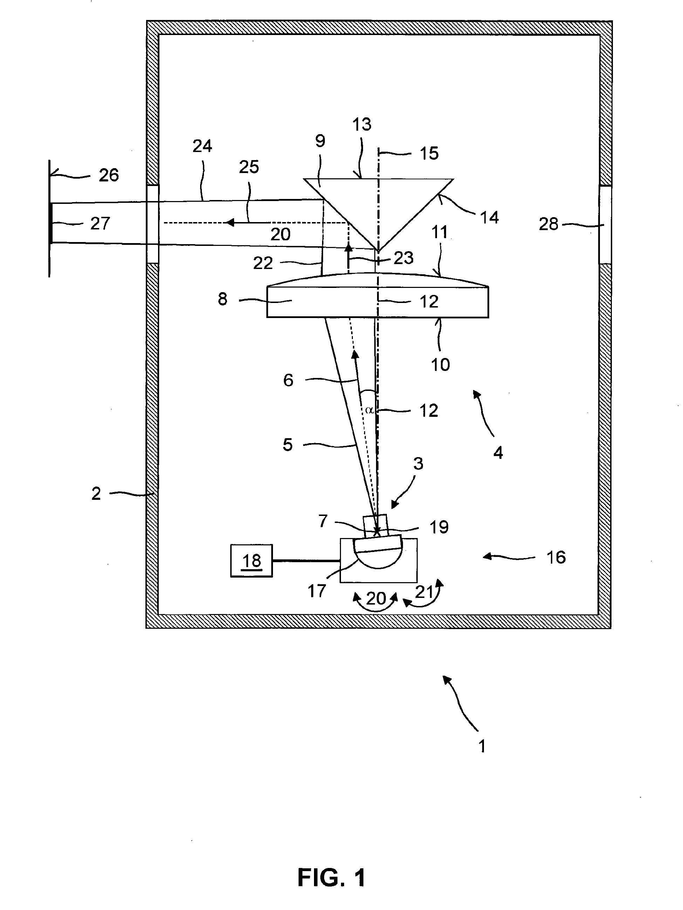

**FIG. 1** zeigt ein erstes erfindungsgemäßes Lasersystem **1** aufweisend ein Gehäuse **2,** eine Strahlquelle **3** und ein optisches System **4.** Die Strahlquelle 3 und das optische System 4 sind in dem Gehäuse 2 angeordnet.

Die Strahlquelle 3 ist als Halbleiterlaser mit einer Wellenlänge im sichtbaren Spektrum ausgebildet, beispielsweise ein roter Halbleiterlaser mit einer Wellenlänge von 635 nm oder ein grüner Halbleiterlaser mit einer Wellenlänge von 532 nm oder 555 nm. Die Strahlquelle 3 ist als punktförmige Strahlquelle ausgebildet, die einen Laserstrahl **5** mit einem endlichen Strahlquerschnitt entlang einer Ausbreitungsrichtung **6** aussendet. Als virtuelle Punktquelle der Strahlquelle 3 ist ein Schnittpunkt **7** definiert, in dem sich die Randstrahlen des Laserstrahls 5 schneiden. Als Ausbreitungsrichtung 6 des Laserstrahls 5 ist bei Laserstrahlen mit einer symmetrischen Strahlverteilung die Symmetrieachse definiert. Bei Laserstrahlen mit einer elliptischen Strahlverteilung ist die Ausbreitungsrichtung 6 definiert als Symmetrieachse der Ellipse. Wird beispielsweise ein symmetrischer Laserstrahl durch eine Blende begrenzt, bleibt die Ausbreitungsrichtung unverändert, lediglich der Schwerpunkt des begrenzten Laserstrahls verändert sich.

Das optische System 4 ist im Strahlengang des Laserstrahls 5 hinter der Strahlquelle 3 angeordnet. Das optische System 4 umfasst ein erstes optisches Element **8,** das als Fokussieroptik ausgebildet ist, und ein zweites optisches Element **9,** das als Kegelspiegel ausgebildet ist. Die Fokussieroptik 8 ist als Fokussierlinse ausgebildet und weist eine plane lichtbrechende Fläche **10** und eine konvexe lichtbrechende Fläche **11** auf. Als optische Achse **12** der Fokussierlinse 8 ist eine Gerade definiert, die durch den Krümmungsmittelpunkt der konvexen Fläche 11 verläuft und senkrecht auf der planen Fläche 10 steht. Der Kegelspiegel 9 ist als Abschnitt eines geraden Kegels mit einer kreisförmigen Grundfläche **13** und einer reflektierenden Mantelfläche **14** ausgebildet; senkrecht zur Grundfläche 10 verläuft die Kegelachse **15.** Die optische Achse 12 der Fokussierlinse 8 und die Kegelachse 15 des Kegelspiegels 9 sind koaxial zueinander angeordnet.

Um mit Hilfe des Kegelspiegels 9 auf einer Projektionsfläche eine über 360° geschlossene Lasermarkierung zu erzeugen, wird die Strahlquelle 3 so ausgerichtet, dass die Ausbreitungsrichtung 6 des Laserstrahls 5 und die Kegelachse 15 des Kegelspiegels 9 koaxial zueinander angeordnet sind. Bei dem erfindungsgemäßen ersten Lasersystem 1 ist der Öffnungswinkel einer linienförmigen Lasermarkierung auf einer Projektionsfläche über die Position der Strahlquelle 3 relativ zum Kegelspiegel 8 einstellbar. Dazu ist eine Winkelverstelleinrichtung **16** vorgesehen, mit der der Winkel α der Strahlquelle 3 verstellbar ist. Als Winkel α der Strahlquelle 3 ist der Winkel zwischen der Ausbreitungsrichtung 6 des Laserstrahls 5 und der optischen Achse 12 der Fokussierlinse 8 definiert. Die Winkelverstelleinrichtung 16 umfasst ein als Kugelkalotte **17** ausgebildetes Lagerelement und eine motorische Verstelleinheit **18.** Die Strahlquelle 3 ist in der Kugelkalotte 17 gelagert und mit Hilfe der Verstelleinheit 18 um einen Drehpunkt **19** in einer ersten Richtung **20** und einer zweiten Richtung **21** drehbar ausgebildet, wobei der Drehpunkt 19 mit der virtuelle Punktquelle 7 zusammenfällt und auf der optischen Achse 12 der Fokussierlinse 8 angeordnet ist.

Die Strahlquelle 3 erzeugt den Laserstrahl 5, der entlang der Ausbreitungsrichtung 6 auf die Fokussierlinse 8 gerichtet ist. Der divergente Laserstrahl 5 trifft auf die Fokussierlinse 8, die den Laserstrahl fokussiert und als fokussierten Laserstrahl **22** entlang einer Ausbreitungsrichtung **23** auf den Kegelspiegel 9 richtet. Die Ausbreitungsrichtung 23 des fokussierten Laserstrahls 22 verläuft parallel zur optischen Achse 12 der Fokussierlinse 8 und parallel zur Kegelachse 15 des Kegelspiegels 9. Der fokussierte Laserstrahl 22 ist zur Kegelachse 15 des Kegelspiegels 9 parallel versetzt. Der Kegelspiegel 9 lenkt den fokussierten Laserstrahl 22 um 90° um und erzeugt einen Laserstrahl **24,** der sich entlang einer Ausbreitungsrichtung **25** ausbreitet und auf einer Projektionsfläche **26** eine linienförmige Lasermarkierung **27** erzeugt. Der Laserstrahl 24 wird über ein Auskoppelfenster **28,** das im Gehäuse 2 vorgesehen ist, aus dem Gehäuse 2 ausgekoppelt.

Die Neigung der Ausbreitungsrichtung 6 des Laserstrahls 5 relativ zur optischen Achse 12 der Fokussierlinse 8 und zur Kegelachse 15 des Kegelspiegels 9 führt dazu, dass der fokussierte Laserstrahl 22 parallel versetzt zur Kegelachse 15 auf die Mantelfläche 14 des Kegelspiegels 9 trifft. Über die Neigung der Strahlquelle 3 lassen sich der vom fokussierten Laserstrahl 22 ausgeleuchtete Abschnitt der Mantelfläche 14 des Kegelspiegels 9 und damit der Öffnungswinkel der linienförmigen Lasermarkierung 27 auf der Projektionsfläche 26 einstellen.

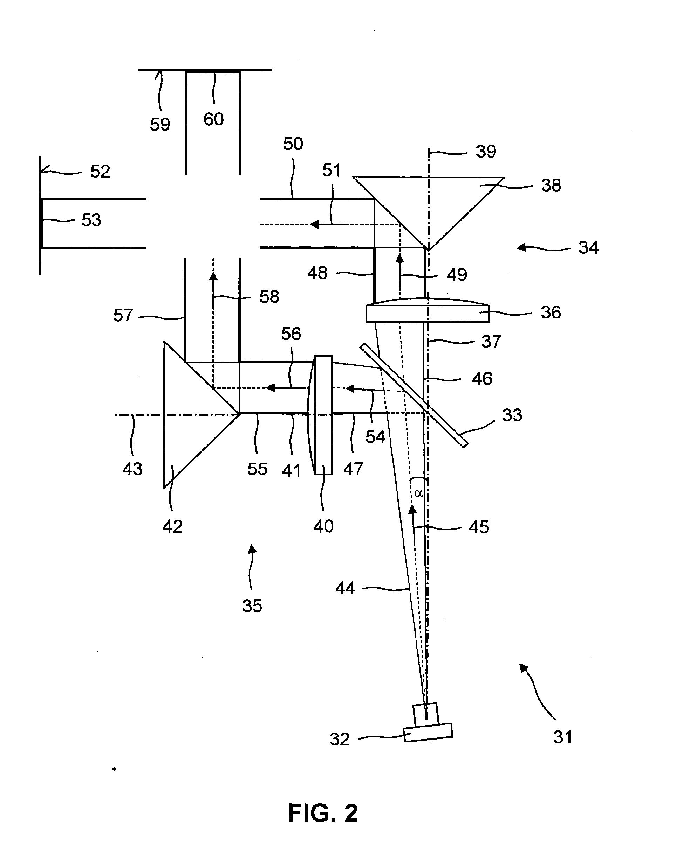

**FIG. 2** zeigt ein zweites erfindungsgemäßes Lasersystem **31** bestehend aus einer Strahlquelle **32,** einer Strahlteilungsoptik **33,** einem ersten optischen System **34** und einem zweiten optischen System **35.** Das erste optische System 34 umfasst eine erste Kollimationslinse **36** mit einer ersten optischen Achse **37** und einen ersten Kegelspiegel **38** mit einer ersten Kegelachse **39,** wobei die erste optische Achse 37 koaxial zur ersten Kegelachse 39 angeordnet ist. Das zweite optische System 35 umfasst eine zweite Kollimationslinse **40** mit einer zweiten optischen Achse **41** und einen zweiten Kegelspiegel **42** mit einer zweiten Kegelachse **43,** wobei die zweite optische Achse 41 koaxial zur zweiten Kegelachse 43 angeordnet ist. Anstelle des ersten oder zweiten Kegelspiegels 38, 42 kann alternativ ein sonstiges geeignetes optisches Element zum Aufweiten eines Laserstrahls, wie beispielsweise eine Zylinderlinse, verwendet werden.

Die Strahlquelle 32 erzeugt einen Laserstrahl **44,** der sich entlang einer Ausbreitungsrichtung **45** ausbreitet und auf die Strahlteilungsoptik 33 gerichtet ist. Die Strahlteilungsoptik 33 teilt den Laserstrahl 44 in einen ersten Teilstrahl **46** und einen zweiten Teilstrahl **47.** Ein Lasersystem mit einer Strahlquelle und einer Strahlteilungsoptik, die mehrere Teilstrahlen erzeugt, eignet sich vor allem für Laserwellenlängen mit einer hohen Sichtbarkeit für das menschliche Auge, wie beispielsweise die grünen Laserwellenlängen bei 532 nm und 555 nm.

Der erste Teilstrahl 46 tritt ungehindert durch die Strahlteilungsoptik 33 hindurch und trifft auf die erste Kollimationslinse 36, die den ersten Teilstrahl 46 kollimiert und als kollimierten ersten Teilstrahl **48** entlang einer Ausbreitungsrichtung **49** auf den ersten Kegelspiegel 37 richtet. Der kollimierte erste Teilstrahl 48 trifft parallel versetzt zur Kegelachse 39 auf den ersten Kegelspiegel 38. Der erste Kegelspiegel 38 lenkt den kollimierten ersten Teilstrahl 48 um 90° um und erzeugt einen Laserstrahl **50,** der sich entlang einer Ausbreitungsrichtung **51** ausbreitet und auf einer ersten Projektionsfläche **52** eine erste linienförmige Lasermarkierung **53** erzeugt.

Der zweite Teilstrahl 47 wird an der Strahlteilungsoptik 33 reflektiert und entlang einer Ausbreitungsrichtung **54** auf die zweite Kollimationslinse 40 gerichtet. Die zweite Kollimationslinse 40 kollimiert den zweiten Teilstrahl 47 und richtet einen kollimierten zweiten Teilstrahl **55** entlang einer Ausbreitungsrichtung **56** parallel versetzt zur Kegelachse 43 auf den zweiten Kegelspiegel 42. Der zweite Kegelspiegel 42 lenkt den kollimierten zweiten Teilstrahl 55 um 90° um und erzeugt einen zweiten Laserstrahl **57,** der sich entlang einer Ausbreitungsrichtung **58** ausbreitet und auf einer zweiten Projektionsfläche **59** eine zweite linienförmige Lasermarkierung **60** erzeugt.

Das zweite erfindungsgemäße Lasersystem 31 erzeugt zwei Laserstrahlen 50, 57, die sich in senkrechten Ausbreitungsrichtungen 51, 58 ausbreiten und auf einer Projektionsfläche 52, 59 jeweils eine linienförmige Lasermarkierung 53, 60 erzeugen.

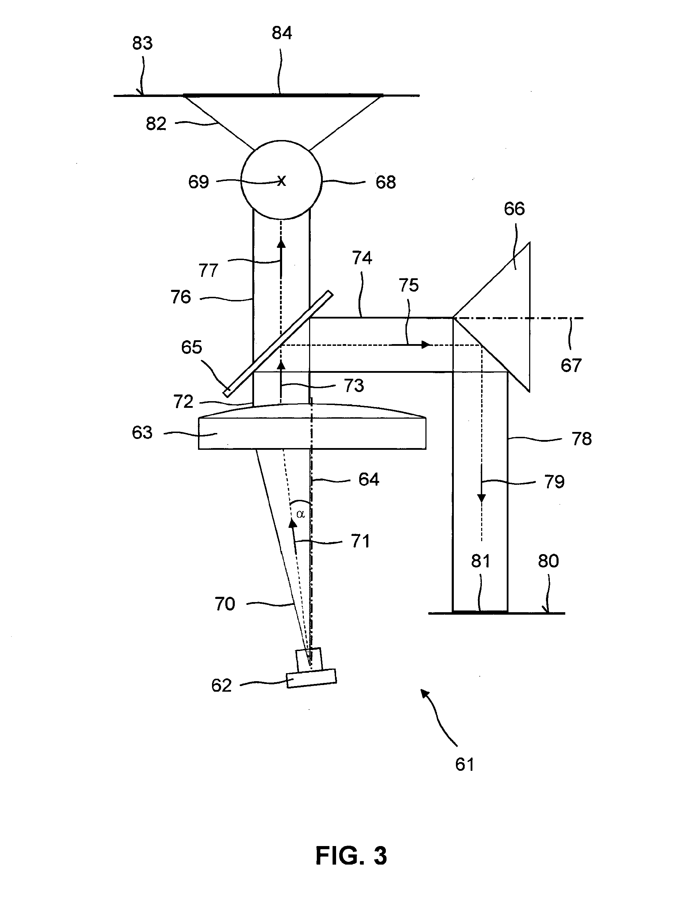

**FIG. 3** zeigt ein drittes erfindungsgemäßes Lasersystem **61** bestehend aus einer Strahlquelle **62,** einer Kollimationslinse **63** mit einer optischen Achse **64,** einer Strahlteilungsoptik **65** sowie einem Kegelspiegel **66** mit einer Kegelachse **67** und einer Zylinderlinse **68** mit einer Zylinderachse **69.** Die optische Achse 64 der Kollimationslinse 63 ist koaxial zur Kegelachse 67 des Kegelspiegels 66 und koaxial zur Zylinderachse 69 der Zylinderlinse 68 angeordnet.

Die Strahlquelle 62 erzeugt einen Laserstrahl **70,** der sich entlang einer Ausbreitungsrichtung **71** ausbreitet und auf die Kollimationslinse 63 gerichtet ist. Die Strahlquelle 62 ist analog zu den Strahlquellen 3, 32 relativ zur optischen Achse 64 der Kollimationslinse 63 um den Winkel α geneigt, wobei der Winkel α zwischen der Ausbreitungsrichtung 71 des Laserstrahls 70 und der optischen Achse 64 der Kollimationslinse 63 gemessen wird.

Die Kollimationslinse 63 kollimiert den Laserstrahl 70 und richtet den Laserstrahl als kollimierten Laserstrahl **72** entlang einer Ausbreitungsrichtung **73** auf die Strahlteilungsoptik 65. Dadurch, dass der Drehpunkt der Strahlquelle 62 mit der virtuellen Punktquelle der Strahlquelle zusammenfällt und der Drehpunkt auf der optischen Achse 64 angeordnet ist, ist die Ausbreitungsrichtung 73 des kollimierten Laserstrahls 72 parallel zur optischen Achse 64 der Kollimationslinse 63 ausgerichtet.

Die Strahlteilungsoptik 65 teilt den kollimierten Laserstrahl 72 in einen ersten Teilstrahl **74** entlang einer ersten Ausbreitungsrichtung **75** und einen zweiten Teilstrahl **76** entlang einer zweiten Ausbreitungsrichtung **77.** Der erste Teilstrahl 74 wird an der Strahlteilungsoptik 65 reflektiert und trifft auf den Kegelspiegel 66. Der Kegelspiegel 66 lenkt den ersten Teilstrahl 74 um 90° um und erzeugt einen ersten Laserstrahl **78,** der sich entlang einer Ausbreitungsrichtung **79** ausbreitet und auf einer ersten Projektionsfläche **80** eine erste linienförmige Lasermarkierung **81** erzeugt. Der zweite Teilstrahl 76 tritt ungehindert durch die Strahlteilungsoptik 65 hindurch und trifft auf die Zylinderlinse 68. Die Zylinderlinse 68 erzeugt einen zweiten Laserstrahl **82,** der auf einer zweiten Projektionsfläche **83** eine zweite linienförmige Lasermarkierung **84** erzeugt.

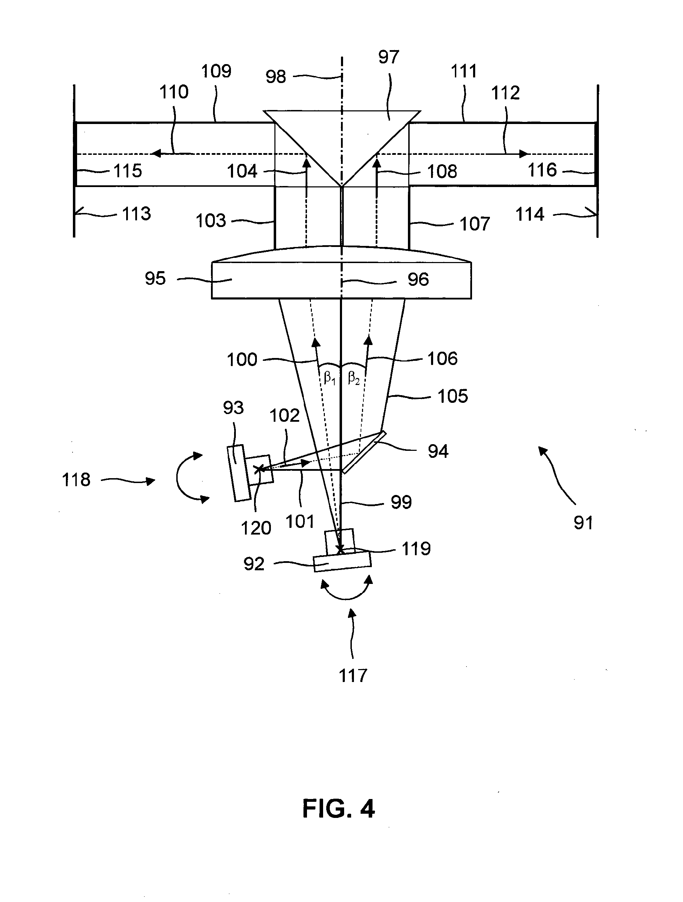

**FIG. 4** zeigt ein viertes erfindungsgemäßes Lasersystem **91** bestehend aus einer ersten Strahlquelle **92,** einer zweiten Strahlquelle **93,** einem Umlenkspiegel **94,** einer Kollimationslinse **95** mit einer optischen Achse **96** und einem Kegelspiegel **97** mit einer Kegelachse **98,** wobei die optische Achse 96 der Kollimationslinse 95 koaxial zur Kegelachse 98 des Kegelspiegels 97 angeordnet ist. Die erste Strahlquelle 92 erzeugt einen ersten Laserstrahl **99** entlang einer ersten Ausbreitungsrichtung **100** und die zweite Strahlquelle 93 erzeugt einen zweiten Laserstrahl **101** entlang einer zweiten Ausbreitungsrichtung **102.**

Der erste Laserstrahl 99 trifft nach dem Austritt aus der ersten Strahlquelle 92 unter einem ersten Winkel β₁ auf die Kollimationslinse 95, die den ersten Laserstrahl 99 kollimiert und als kollimierten ersten Laserstrahl **103** entlang einer Ausbreitungsrichtung **104** auf den Kegelspiegel 97 richtet. Die Ausbreitungsrichtung 104 des kollimierten ersten Laserstrahls 103 verläuft parallel zur Kegelachse 98 des Kegelspiegels 97.

Der zweite Laserstrahl 101 trifft nach dem Austritt aus der zweiten Strahlquelle 93 auf den Umlenkspiegel 94, der den zweiten Laserstrahl 101 umlenkt und als umgelenkten Laserstrahl **105** entlang einer Ausbreitungsrichtung **106** auf die Kollimationslinse 95 richtet. Die Ausbreitungsrichtung 106 des umgelenkten zweiten Laserstrahls 105 ist unter einem zweiten Winkel β₂ zur optischen Achse 96 der Kollimationslinse 95 geneigt. Die Kollimationslinse 95 kollimiert den umgelenkten zweiten Laserstrahl 105 und richtet ihn als kollimierten zweiten Laserstrahl **107** entlang einer Ausbreitungsrichtung **108** auf den Kegelspiegel 97. Die Ausbreitungsrichtung 108 des kollimierten zweiten Laserstrahls 107 verläuft parallel zur Kegelachse 98 des Kegelspiegels 97.

Der Kegelspiegel 97 lenkt den kollimierten ersten und zweiten Laserstrahl 103, 107 jeweils um 90° um und erzeugt einen ersten Laserstrahl **109,** der sich entlang einer ersten Ausbreitungsrichtung **110** ausbreitet, und einen zweiten Laserstrahl **111,** der sich entlang einer zweiten Ausbreitungsrichtung **112** ausbreitet. Der erste und zweite Laserstrahl 109, 111 erzeugen auf einer Projektionsfläche **113, 114** eine erste und zweite linienförmige Lasermarkierung **115, 116.**

Die erste Strahlquelle 92 ist unter dem ersten Winkel β₁ und die zweite Strahlquelle 93 unter dm zweiten Winkel β₂ zur optischen Achse 96 der Kollimationslinse 95 geneigt. Die Winkel β₁, β₂ sind analog zum Winkel α des ersten Lasersystems 1 definiert und verstellbar ausgebildet. Dazu sind eine erste Wnkelverstelleinrichtung **117** und eine zweite Winkelverstelleinrichtung **118** vorgesehen. Die erste Strahlquelle 92 ist mittels der ersten Winkelverstelleinrichtung 117 um einen ersten Drehpunkt **119** und die zweite Strahlquelle 93 mittels der zweiten Winkelverstelleinrichtung 118 um einen zweiten Drehpunkt **120** drehbar.

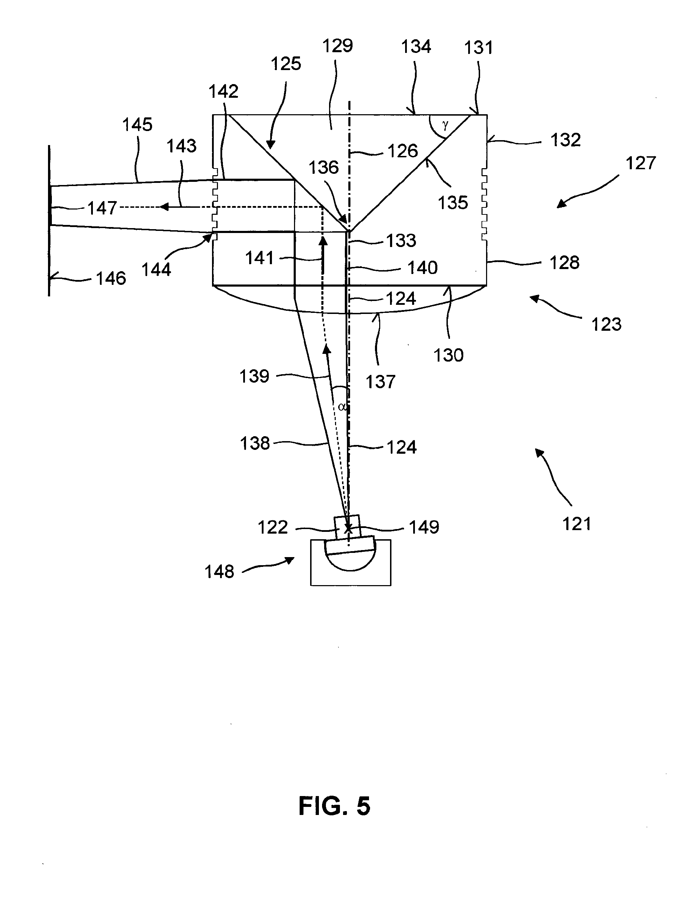

**FIG. 5** zeigt ein fünftes erfindungsgemäßes Lasersystem **121** bestehend aus einer Strahlquelle **122,** einer Kollimationsoptik **123** mit einer optischen Achse **124** und einem Kegelspiegel **125** mit einer Kegelachse **126.** Die Kollimationsoptik 123 und der Kegelspiegel 125 sind in eine gemeinsame Strahlformungsoptik **127** integriert.

Die Strahlformungsoptik 127 ist als Grundkörper in Form eines geraden Kreiszylinders **128** mit einem Ausschnitt in Form eines geraden Kreiskegels **129** ausgebildet. Ein Kreiszylinder ist ein Zylinder mit einer kreisförmigen Grundfläche. Ein Zylinder ist von zwei parallelen, ebenen Flächen, die als Grund- und Deckfläche bezeichnet werden, und einer Mantelfläche begrenzt. Bei einem geraden Zylinder liegt die Zylinderachse senkrecht zur Grundfläche. Die Oberfläche des Kreiszylinders 128 umfasst eine kreisförmige Grundfläche **130,** eine zur Grundfläche 130 parallele kreisförmige Deckfläche **131** und eine die Grund- und Deckflächen 130, 131 verbindende Mantelfläche **132.** Die Grund- und Deckflächen 130, 131 sind senkrecht und die Mantelfläche 132 parallel zu einer Zylinderachse **133** angeordnet.

Die Grundfläche 130 und die Mantelfläche 132 bilden jeweils eine Grenzfläche zwischen der Strahlformungsoptik 127 und der Umgebung und werden als Transmissionsflächen für den Laserstrahl bezeichnet. Der Transmissionsgrad einer Transmissionsfläche hängt unter anderem vom Einfallswinkel eines einfallenden Laserstrahls und den Brechungsindices der Materialien ab. Der Transmissionsgrad kann dadurch erhöht werden, dass die Transmissionsfläche mit einer Beschichtung versehen wird. Je höher der transmittierte Anteil des Laserstrahls ist, umso größer ist die Intensität und umso besser ist die Sichtbarkeit des Laserstrahls auf einem Zielobjekt.

Die Oberfläche des kegelförmigen Ausschnittes 129 umfasst eine kreisförmige Grundfläche **134,** die senkrecht zur Kegelachse 126 angeordnet ist, und eine an die Grundfläche 134 angrenzende Mantelfläche **135,** die unter einem Winkel γ zur Grundfläche 134 angeordnet ist. Die Grundfläche 134 des Kreiskegels 129 ist auf der Deckfläche 131 des Kreiszylinders 128 angeordnet und die Kegelachse 126 verläuft kollinear zur Zylinderachse 133, so dass eine Kegelspitze **136** auf der Zylinderachse 133 liegt.

Die Kollimationsoptik 123 ist in die Grundfläche 130 des Kreiszylinders 128 integriert. Dabei bedeutet Integration, dass die Kollimationsoptik 123 unmittelbar an die Grundfläche 130 des Kreiszylinders 128 angrenzt und zwischen der Grundfläche 130 und der Kollimationsoptik 123 keine Grenzfläche besteht. Als Grenzfläche ist eine Fläche definiert, die zwischen zwei Medien mit unterschiedlichen Brechungsindices angeordnet ist. Die Kollimationsoptik 123 ist als asphärisch gekrümmte Linse ausgebildet.

Die Strahlformungsoptik 127 mit der integrierten Kollimationsoptik 123 ist monolithisch aus einem Material hergestellt. Als Materialien für die Strahlformungsoptik 127 eignen sich beispielsweise Glas und Kunststoffe. Die asphärische Krümmung wird bei Glas durch Diamantdrehen, Replika, Schleifen und Polieren oder durch Pressen bei hohen Temperaturen aus einem Glaspressling und bei Kunststoff durch Spritzgießen oder Spritzprägen erzeugt. Die der Grundfläche 130 des Kreiszylinders 128 abgewandte Oberfläche der Kollimationsoptik 123 bildet eine gekrümmte Eintrittsfläche **137** für den Laserstrahl. Dabei wird die Größe der Kollimation über den Krümmungsradius der Eintrittsfläche 137 eingestellt.

Die Mantelfläche 135 des kegelförmigen Ausschnittes 129 bildet eine Grenzfläche zwischen der Strahlformungsoptik 127 und der Umgebung und wird im Folgenden als Reflexionsfläche bezeichnet. Der Reflexionsgrad einer Reflexionsfläche hängt unter anderem vom Einfallswinkel eines einfallenden Laserstrahls und den Brechungsindices der Materialien ab. Damit der einfallende Laserstrahl möglichst vollständig an der Mantelfläche 135 reflektiert wird, sollte der Einfallswinkel die Bedingung der Totalreflektion erfüllen. Der reflektierte Anteil kann alternativ oder zusätzlich dadurch erhöht werden, dass die Reflexionsfläche mit einer hochreflektierenden Beschichtung versehen wird. Je höher der reflektierte Anteil des Laserstrahls ist, umso größer ist die Intensität und umso besser ist die Sichtbarkeit des Laserstrahls auf einem Zielobjekt.

Die Strahlquelle 122 erzeugt einen Laserstrahl **138,** der sich entlang einer Ausbreitungsrichtung **139** ausbreitet und auf die Kollimationsoptik 123 gerichtet ist. Der divergente Laserstrahl 138 trifft auf die gekrümmte Eintrittsfläche 137, die einen kollimierten Laserstrahl **140** erzeugt. Der kollimierte Laserstrahl 140 propagiert entlang einer Ausbreitungsrichtung **141** durch die Strahlformungsoptik 127 und trifft auf die Reflexionsfläche 135 des kegelförmigen Ausschnittes 129, die den Kegelspiegel 125 bildet. Die Reflexionsfläche 135 formt den kollimierten Laserstrahl 140 in einen Laserstrahl **142,** der sich entlang einer Ausbreitungsrichtung **143** ausbreitet, um. Der Laserstrahl 142 trifft auf die Mantelfläche 132 des Kreiszylinders 128, die auch als Austrittsfläche bezeichnet wird.

Bei der in FIG. 5 gezeigten Ausführungsform der Strahlformungsoptik 127 ist ein weiteres strahlformendes optisches Element in Form einer Fokussieroptik **144** in die Mantelfläche 132 integriert. Die Fokussieroptik 144 ist als mikrostrukturierte Oberfläche in Form eines diffraktiven optischen Elementes ausgebildet. Diffraktive optische Elemente wirken prinzipiell wie ein optisches Gitter und spalten einen einfallenden Laserstrahl winkelabhängig in verschiedene Beugungsordnungen. Diffraktive optische Elemente haben den Vorteil, dass sich Laserstrahlen in nahezu jede beliebige Strahlverteilung formen lassen. Sie werden in photolithographischen Herstellungsverfahren sowie mittels scannender Strukturierungsverfahren wie Diamantdrehen, Laser- oder Elektronenstrahlschreiben hergestellt. Der Laserstrahl 142 wird von der Fokussieroptik 144 in einen fokussierten Laserstrahl **145** umgeformt, der sich entlang der Ausbreitungsrichtung 143 ausbreitet. Der fokussierte Laserstrahl 145 erzeugt auf einer Projektionsfläche **146** eine linienförmige Lasermarkierung **147.**

Die Strahlquelle 122 ist unter dem Winkel α zur optischen Achse 124 der Kollimationsoptik 123 angeordnet. Der Winkel α ist mittels einer Winkelverstelleinrichtung **148** verstellbar ausgebildet. Die Strahlquelle 122 ist mittels der Wnkelverstelleinrichtung 148 um einen Drehpunkt **149,** der auf der optischen Achse 124 der Kollimationsoptik 123 liegt, drehbar ausgebildet. Der Drehpunkt 149 fällt mit der virtuellen Punktquelle der Strahlquelle 122 zusammen und ist auf der optischen Achse 124 der Kollimationsoptik 123 angeordnet.

## Patentansprüche

1. Lasersystem (1; 31; 61; 91; 121) zur Erzeugung einer linienförmigen Lasermarkierung (27; 53, 60; 81, 84; 115, 116; 147) aufweisend
eine Strahlquelle (3; 32; 62; 92, 93; 122), die einen Laserstrahl (5; 44; 70; 99, 101; 138) erzeugt und entlang einer Ausbreitungsrichtung (6; 45; 71; 100, 102; 139) aussendet, eine Fokussieroptik (8; 36, 40; 63; 95; 123) mit einer optischen Achse (12; 37, 41; 64; 96; 124) und
einen Kegelspiegel (9; 38, 42; 66; 97; 125), der zumindest abschnittsweise als gerader Kegel mit einer Kegelachse (15; 39, 43; 67; 98; 126) und einer reflektierenden Mantelfläche (14; 135) ausgebildet ist, wobei der Kegelspiegel (9; 38, 42; 66; 97; 125) im Strahlengang des Laserstrahls hinter der Fokussieroptik (8; 36, 40; 63; 95; 123) angeordnet ist und die Kegelachse (15; 39, 43; 67; 98; 126) parallel zur optischen Achse (12; 37, 41; 64; 96; 124) der Fokussieroptik (8; 36, 40; 63; 95; 123) ausgerichtet ist,
**dadurch gekennzeichnet, dass**
die Ausbreitungsrichtung (6; 45; 71; 100, 102; 139) des Laserstrahls (5; 44; 70; 99, 101; 138) unter einem Winkel (α; β₁, β₂) zur optischen Achse (12; 37, 41; 64; 96; 124) der Fokussieroptik (8; 36, 40; 63; 95; 123) geneigt ist.

2. Lasersystem nach Anspruch 1, **dadurch gekennzeichnet, dass** eine Winkelverstelleinrichtung (16; 117, 118; 148) vorgesehen ist, mit der der Winkel (α; β₁, β₂) zwischen der Ausbreitungsrichtung (6; 45; 71; 100, 102; 139) des Laserstrahls (5; 44; 70; 99, 101; 138) und der optischen Achse (12; 37, 41; 64; 96; 124) der Fokussieroptik (8; 36, 40; 63; 95; 123) um einen Drehpunkt (18; 119, 120; 149) verstellbar ist, wobei der Drehpunkt (18; 119, 120; 149) der Winkelverstelleinrichtung (16; 117, 118; 148) mit einer virtuellen Punktquelle (7) der Strahlquelle (3; 32; 62; 92, 93; 122) zusammenfällt.

3. Lasersystem nach Anspruch 2, **dadurch gekennzeichnet, dass** der Drehpunkt (18; 119, 120; 149) der Winkelverstelleinrichtung (16; 117, 118; 148) auf der optischen Achse (12; 37, 41; 64; 96; 124) der Fokussieroptik (8; 36, 40; 63; 95; 123) angeordnet ist.

4. Lasersystem nach einem der Ansprüche 2 bis 3, **dadurch gekennzeichnet, dass** der Winkel (α; β₁, β₂) zwischen der Ausbreitungsrichtung (6; 45; 71; 100, 102; 139) des Laserstrahls (5; 44; 70; 99, 101; 138) und der optischen Achse (12; 37, 41; 64; 96; 124) der Fokussieroptik (8; 36, 40; 63; 95; 123) in einer ersten Richtung (20) und/oder einer zweiten Richtung (21) verstellbar ist.

5. Lasersystem nach einem der Ansprüche 2 bis 4, **dadurch gekennzeichnet, dass** eine motorisch verstellbare Winkelverstelleinrichtung (16; 117, 118; 148) vorgesehen ist.

6. Lasersystem nach einem der Ansprüche 1 bis 5, **dadurch gekennzeichnet, dass** eine Strahlteilungsoptik (33; 65) vorgesehen ist, die den Laserstrahl (44; 70) in einen ersten Teilstrahl (46; 74) entlang einer ersten Ausbreitungsrichtung (45; 75) und einen zweiten Teilstrahl (47; 76) entlang einer zweiten Ausbreitungsrichtung (53; 77) teilt.

7. Lasersystem nach Anspruch 6, **dadurch gekennzeichnet, dass** die Strahlteilungsoptik (65) im Strahlengang des Laserstrahls hinter der Fokussieroptik (63) angeordnet ist.

8. Lasersystem nach einem der Ansprüche 1 bis 6, **dadurch gekennzeichnet, dass** die Fokussieroptik (123) und der Kegelspiegel (125) in eine gemeinsame Strahlformungsoptik (127) integriert sind.

9. Lasersystem nach einem der Ansprüche 1 bis 5 oder 8, **dadurch gekennzeichnet, dass** eine erste und zweite Strahlquelle (92, 93) vorgesehen sind, wobei die erste Strahlquelle (92) einen ersten Laserstrahl (99) entlang einer ersten Ausbreitungsrichtung (100) und die zweite Strahlquelle (93) einen zweiten Laserstrahl (101) entlang einer zweiten Ausbreitungsrichtung (102) aussendet.

10. Lasersystem nach Anspruch 9, **dadurch gekennzeichnet, dass** die erste Ausbreitungsrichtung (100) des ersten Laserstrahls (99) unter einem ersten Winkel (β₁) und die zweite Ausbreitungsrichtung (102) des zweiten Laserstrahls (101) unter einem zweiten Winkel (β₂) zur optischen Achse (96) der Fokussieroptik (95) geneigt ist.

11. Lasersystem nach Anspruch 10, **dadurch gekennzeichnet, dass** eine erste Winkelverstelleinrichtung (115) zur Einstellung des ersten Winkels (β₁) und eine zweite Winkelverstelleinrichtung (116) zur Einstellung des zweiten Winkels (β₂) vorgesehen sind.

12. Lasersystem nach einem der Ansprüche 9 bis 11, **dadurch gekennzeichnet, dass** die erste und zweite Strahlquelle (92, 93) verschiedene Laserwellenlängen aufweisen.

13. Lasersystem nach einem der Ansprüche 9 bis 11, **dadurch gekennzeichnet, dass** die erste und zweite Strahlquelle (92, 93) dieselbe Laserwellenlänge aufweisen.

## Claims

1. Laser system (1; 31; 61; 91; 121) for producing a linear laser marking (27; 53, 60; 81, 84; 115, 116; 147) comprising
a beam source (3; 32; 62; 92, 93; 122) that produces a laser beam (5; 44; 70; 99, 101; 138) and emits it in a direction of propagation (6; 45; 71; 100, 102; 139),
a focusing lens system (8; 36, 40; 63; 95; 123) with an optical axis (12; 37, 41; 64; 96; 124) and
a conical mirror (9; 38, 42; 66; 97; 125) designed at least in some areas as a straight cone with a cone axis (15; 39, 43; 67; 98; 126) and a reflecting lateral surface (14; 135), the conical mirror (9; 38, 42; 66; 97; 125) being arranged in the beam path of the laser beam behind the focusing lens system (8; 36, 40; 63; 95; 123) and the cone axis (15; 39, 43; 67; 98; 126) being oriented parallel to the optical axis (12; 37, 41; 64; 96; 124) of the focusing lens system (8; 36, 40; 63; 95; 123),
**characterised in that**
the direction of propagation (6; 45; 71; 100, 102; 139) of the laser beam (5; 44; 70; 99, 101; 138) is inclined at an angle (α; β₁, β₂) relative to the optical axis (12; 37, 41; 64; 96; 124) of the focusing lens system (8; 36, 40; 63; 95; 123).

2. Laser system according to claim 1, **characterised by** an angle adjuster (16; 117, 118; 148) by means of which the angle (α; β₁, β₂) between the direction of propagation (6; 45; 71; 100, 102; 139) of the laser beam (5; 44; 70; 99, 101; 138) and the optical axis (12; 37, 41; 64; 96; 124) of the focusing lens system (8; 36, 40; 63; 95; 123) can be adjusted about a centre of rotation (18; 119, 120; 149), the centre of rotation (18; 119, 120; 149) of the angle adjuster (16; 117, 118; 148) coinciding with a virtual point source (7) of the beam source (3; 32; 62; 92, 93; 122).

3. Laser system according to claim 2, **characterised in that** the centre of rotation (18; 119, 120; 149) of the angle adjuster (16; 117, 118; 148) is arranged on the optical axis (12; 37, 41; 64; 96; 124) of the focusing lens system (8; 36, 40; 63; 95; 123).

4. Laser system according to one of claims 2 to 3, **characterised in that** the angle (α; β₁, β₂) between the direction of propagation (6; 45; 71; 100, 102; 139) of the laser beam (5; 44; 70; 99, 101; 138) and the optical axis (12; 37, 41; 64; 96; 124) of the focusing lens system (8; 36, 40; 63; 95; 123) can be adjusted in a first direction (20) and/or in a second direction (21).

5. Laser system according to one of claims 2 to 4, **characterised by** an angle adjuster (16; 117, 118; 148) adjustable by means of a motor.

6. Laser system according to one of claims 1 to 5, **characterised by** a beam-splitting lens system (33; 65) that splits the laser beam (44; 70) into a first partial beam (46; 74) in a first direction of propagation (45; 75) and a second partial beam (47; 76) in a second direction of propagation (53; 77).

7. Laser system according to claim 6, **characterised in that** the beam-splitting lens system (65) is arranged in the beam path of the laser beam behind the focusing lens system (63).

8. Laser system according to one of claims 1 to 6, **characterised in that** the focusing lens system (123) and the conical mirror (125) are integrated into a common beam-forming lens system (127).

9. Laser system according to one of claims 1 to 5 or 8, **characterised by** first and second beam sources (92, 93), the first beam source (92) emitting a first laser beam (99) in a first direction of propagation (100) and the second beam source (93) emitting a second laser beam (101) in a second direction of propagation (102).

10. Laser system according to claim 9, **characterised in that** the first direction of propagation (100) of the first laser beam (99) is inclined at a first angle (β₁) and the second direction of propagation (102) of the second laser beam (101) is inclined at a second angle (β₂) relative to the optical axis (96) of the focusing lens system (95).

11. Laser system according to claim 10, **characterised by** a first angle adjuster (115) for adjusting the first angle (β₁) and a second angle adjuster (116) for adjusting the second angle (β₂).

12. Laser system according to one of claims 9 to 11, **characterised in that** the first and second beam sources (92, 93) have different laser wavelengths.

13. Laser system according to one of claims 9 to 11, **characterised in that** the first and second beam sources (92, 93) have the same laser wavelength.

## Revendications

1. Système laser (1 ; 31 ; 61 ; 91 ; 121) destiné à créer un marquage laser linéaire (27 ; 53, 60 ; 81, 84 ; 115, 116 ; 147) comportant :
une source de rayonnement (3 ; 32 ; 62 ; 92, 93 ; 122) qui produit un faisceau laser (5 ; 44 ; 70 ; 99, 101 ; 138) et émet le long d'une direction de propagation (6 ; 45 ; 71 ; 100, 102 ; 139),
un composant optique de focalisation (8 ; 36, 40 ; 63 ; 95 ; 123) avec un axe optique (12 ; 37, 41 ; 64 ; 96 ; 124) et
un miroir conique (9 ; 38, 42 ; 66 ; 97 ; 125) qui est configuré, au moins dans certaines zones, comme un cône droit avec un axe de cône (15 ; 39, 43 ; 67 ; 98 ; 126) et une surface d'enveloppe réfléchissante (14 ; 135), dans lequel le miroir conique (9 ; 38, 42 ; 66 ; 97 ; 125) est agencé dans le trajet de faisceau du faisceau laser derrière le composant optique de focalisation (8 ; 36, 40 ; 63 ; 95 ; 123) et l'axe de cône (15 ; 39, 43 ; 67 ; 98 ; 126) est orienté parallèlement à l'axe optique (12 ; 37, 41 ; 64 ; 96 ; 124) du composant optique de focalisation (8 ; 36, 40 ; 63 ; 95 ; 123),
**caractérisé en ce que**
la direction de propagation (6 ; 45 ; 71 ; 100, 102 ; 139) du faisceau laser (5 ; 44 ; 70 ; 99, 101 ; 138) est inclinée d'un angle (α ; β₁, β₂) par rapport à l'axe optique (12 ; 37, 41 ; 64 ; 96 ; 124) du composant optique de focalisation (8 ; 36, 40 ; 63 ; 95 ; 123).

2. Système laser selon la revendication 1, **caractérisé en ce qu'**un dispositif de réglage angulaire (16 ; 117, 118 ; 148) est prévu, au moyen duquel l'angle (α ; β₁, β₂) entre la direction de propagation (6 ; 45 ; 71 ; 100, 102 ; 139) du faisceau laser (5 ; 44 ; 70 ; 99, 101 ; 138) et l'axe optique (12 ; 37, 41 ; 64 ; 96 ; 124) du composant optique de focalisation (8 ; 36, 40 ; 63 ; 95 ; 123) peut être réglé autour d'un centre de rotation (18 ; 119, 120 ; 149), dans lequel le centre de rotation (18 ; 119, 120 ; 149) du dispositif de réglage angulaire (16 ; 117, 118 ; 148) coïncide avec une source ponctuelle virtuelle (7) de la source de rayonnement (3 ; 32 ; 62 ; 92, 93 ; 122).

3. Système laser selon la revendication 2, **caractérisé en ce que** le centre de rotation (18 ; 119, 120 ; 149) du dispositif de réglage angulaire (16 ; 117, 118 ; 148) est agencé sur l'axe optique (12 ; 37, 41 ; 64 ; 96 ; 124) du composant optique de focalisation (8 ; 36, 40 ; 63 ; 95 ; 123).

4. Système laser selon l'une des revendications 2 à 3, **caractérisé en ce que** l'angle (α ; β₁, β₂) entre la direction de propagation (6 ; 45 ; 71 ; 100, 102 ; 139) du faisceau laser (5 ; 44 ; 70 ; 99, 101 ; 138) et l'axe optique (12 ; 37, 41 ; 64 ; 96 ; 124) du composant optique de focalisation (8 ; 36, 40 ; 63 ; 95 ; 123) peut être réglé dans une première direction (20) et/ou une seconde direction (21).

5. Système laser selon l'une des revendications 2 à 4, **caractérisé en ce qu'**un dispositif de réglage angulaire motorisé réglable (16 ; 117, 118 ; 148) est prévu.

6. Système laser selon l'une des revendications 1 à 5, **caractérisé en ce qu'**un composant optique de séparation de faisceau (33 ; 65) est prévu, lequel composant sépare le faisceau laser (44 ; 70) en un premier faisceau partiel (46 ; 74) le long d'une première direction de propagation (45 ; 75) et en un second faisceau partiel (47 ; 76) le long d'une seconde direction de propagation (53 ; 77).

7. Système laser selon la revendication 6, **caractérisé en ce que** le composant optique de séparation de faisceau (65) est agencé dans le trajet de faisceau du faisceau laser derrière le composant optique de focalisation (63).

8. Système laser selon l'une des revendications 1 à 6, **caractérisé en ce que** le composant optique de focalisation (123) et le miroir conique (125) sont intégrés dans un composant optique de formation de faisceau commun (127).

9. Système laser selon l'une des revendications 1 à 5 ou 8, **caractérisé en ce qu'**une première et une seconde sources de rayonnement (92, 93) sont prévues, dans lequel la première source de rayonnement (92) émet un premier faisceau laser (99) le long d'une direction de propagation (100) et la seconde source de rayonnement (93) émet un second faisceau laser (101) le long d'une seconde direction de propagation (102).

10. Système laser selon la revendication 9, **caractérisé en ce que** la première direction de propagation (100) du premier faisceau laser (99) est inclinée d'un premier angle (β₁) et la seconde direction de propagation (102) du second faisceau laser (101) est inclinée d'un second angle (β₂) par rapport à l'axe optique (96) du composant optique de focalisation (95).

11. Système laser selon la revendication 10, **caractérisé en ce qu'**un premier dispositif de réglage angulaire (115) est prévu pour régler le premier angle (β₁) et un second dispositif de réglage angulaire (116) est prévu pour régler le second angle (β₂).

12. Système laser selon l'une des revendications 9 à 11, **caractérisé en ce que** les première et seconde sources de rayonnement (92, 93) ont des longueurs d'onde du laser différentes.

13. Système laser selon l'une des revendications 9 à 11, **caractérisé en ce que** les première et seconde sources de rayonnement (92, 93) ont la même longueur d'onde du laser.
